# EUROPÄISCHE PATENTANMELDUNG

(11) **EP 2 444 618 A1**
(43) Veröffentlichungstag der Anmeldung: **25.04.2012**
(21) Anmeldenummer: 11007367.3
(22) Anmeldetag: 09.09.2011
(51) Int. Cl.: F01N 13/16, F16L 59/02

(54) **Isolierformteil**

(30) Priorität: 20.10.2010 DE 102010048974
(71) Anmelder: ISOLITE GmbH, 67063 Ludwigshafen (DE)
(72) Erfinder: Kroll, Matthias, 67273 Dackenheim (DE); Buchsteiner, Armin, 74889 Sinsheim (DE)
(74) Vertreter: Grünecker, Kinkeldey, Stockmair & Schwanhäusser

(57) **Zusammenfassung**

Es wird ein Isolierformteil (3) für ein heißgasführendes Bauteil (1), insbesondere eine Abgasanlage eines Verbrennungsmotors beschrieben, das eine erhöhte mechanische Festigkeit durch Verwendung eines Isolierfasergewebes aufweist.

## Beschreibung

Die Erfindung bezieht sich auf ein Isolierformteil für ein heißgasführendes Bauteil, insbesondere für eine Abgasanlage eines Verbrennungsmotors.

Heißgasführende Bauteile, insbesondere in den Abgasanlagen für Kraftfahrzeuge werden oft mit Isolierformteilen gedämmt. Diese Isolierformteile bestehen aus Isolierfaservlies aus Glasfasern oder Silikatfasern, die ungeordnet zu einer Matte gelegt sind und die dann mit einem Bindemittel, meist Tonerde, z.B. Bentonit, versetzt und heiß in eine Form gepresst werden. Bei geringen Wandstärken der Isolierformteile passiert es häufig, dass die Fasern der verwendeten Isolierfaservliese zu stark beansprucht werden und brechen, was die Isolierwirkung stark beeinträchtigt. Darüber hinaus wurde festgestellt, dass Vliesmatten, d.h. Matten mit ungeordnet gelegten Fasern, unter dem Einfluss von Vibrationen, wie sie bei Kraftfahrzeugen regelmäßig auftreten, dazu tendieren, ihren inneren Zusammenhalt zu verlieren, so dass ein "Ausbtasen" der Fasern, beispielsweise durch unvermeidliche Schraublöcher oder dgl., nicht immer zu verhindern ist.

Der Erfindung liegt die Aufgabe zugrunde, ein Isolierformteil mit erhöhter mechanischer Festigkeit zu schaffen.

Die Aufgabe wird durch die Merkmale des Anspruches 1 gelöst.

Durch die erfindungsgemäße Verwendung eines lsolierfasergewebes, d.h. einer Struktur, bei der die Fasern eine regelmäßige, definierte und feste Verbindung miteinander eingehen, kann ein Isolierformteil mit erhöhter Widerstandsfähigkeit gegen mechanische Belastung sowohl im Herstellungsprozess als auch im Betrieb geschaffen werden. Das erfindungsgemäße Isolierformteil weist diese erhöhte Festigkeit auch bei sehr geringen Mindestdicken oder Mindestwandstärken von 1 mm oder weniger auf, was sich insbesondere bei Pressformteilen oder bei Vibrationen im Betrieb positiv auswirkt.

Bevorzugte Materialien für das Isolierfasergewebe sind mineralische Fasern, wie Silikatfasern und/oder Glasfasern und/oder keramische Fasern.

Bevorzugt werden die Isolierfasern verzwirnt, da dies eine weitere Erhöhung der mechanischen Festigkeit bewirkt.

Zur Herstellung des Isolierformteiles wird das Isolierfasergewebe durch Bindemittel verfestigt und heißgepresst, wie dies auch bei herkömmlichen Isoliervliesmatten durchgeführt wird.

Dem Isolierfasergewebe kann zur Erhöhung der Wärmeabsorption oder der Wärmereflexion ein Anteil an Farbpigmenten zugesetzt werden, wobei die Farbpigmente bevorzugt dem Bindemittel beigemischt werden.

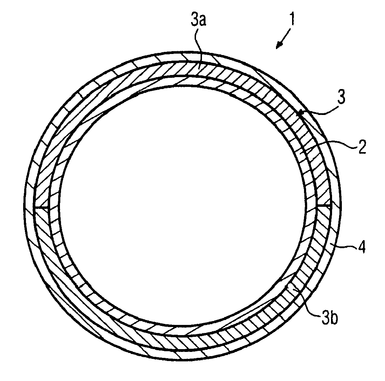

Ein Ausführungsbeispiel der Erfindung wird nachfolgend anhand der einzigen Zeichnung gezeigt, die einen Querschnitt durch ein heißgasführendes Bauteil mit dem erfindungsgemäßen Isolierformteil zeigt.

Das heißgasführende Bauteil 1 ist bevorzugt Teil einer Abgasanlage eines Verbrennungsmotors und ist beispielsweise eine Rohrleitung 2, wie ein Abgaskrümmer oder dgl.. Die Rohrleitung 2 kann aus den üblichen Materialien, wie Metallguss oder -blech oder dgl. gefertigt sein. Die Außenseite des Rohres 2 ist mit einem bevorzugt selbsttragenden Isolierformteil 3 bedeckt, das im dargestellten Ausführungsbeispiel aus zwei Dämmschalen 3a, 3b zusammengesetzt ist, die jeweils den halben Umfang des Rohres 2 bedecken und die nach außen hin von einer Hülle 4 bedeckt sind.

Das Isolierformteil ist unter Verwendung eines Isolierfasergewebes hergestellt. Isolierfasergewebe sind handelsüblich und bestehen aus quer- und längsverlaufenden Fäden, die miteinander mit den unterschiedlichsten, aus dem Textilbereich bekannten Bindungsarten verflochten sind.

Ein besonders bevorzugtes Ausführungsbeispiel eines Isolierfasergewebes ist unter der Marke Hakoterm® 1200 HG 1305 im Handel. Dieses Material besteht aus gezwirnten Silikatfasern, die zu einer Gewebematte verarbeitet wurden.

Statt Gewebematten aus Silikatfasern sind jedoch auch Glasfasergewebe oder Gewebe aus ähnlichen für eine Isolierung geeigneten Fasern, z.B. Mineralfasern, einsetzbar.

Zum Herstellen des Isolierformteiles wird ein passender Zuschnitt des Isolierfasergewebes mit einem herkömmlichen Bindemittel, beispielsweise Tonerde in Form von Betonit, aufgeschlämmt im Wasser, versehen und anschließend durch Heißpressen in Endform gebracht.

Dem Bindemittel können jedoch auch Farbpigmente zugesetzt werden, die die Wärmeabsorption und Wärmereflexion in einer Weise beeinflussen, dass einerseits die umgebenden Bauteile gegen thermische Überlastung geschützt und andererseits dafür gesorgt wird, dass beim Anfahren des Verbrennungsmotors sehr schnell eine Erhöhung der Abgasenergie erreicht wird, was zu einem schnellen Anstieg der Temperatur in der Abgasleitung während der Anlaufzeit und dadurch zu einer Reduzierung der NOₓ-Werte und des CO₂-Ausstoßes führt.

Ein besonders geeignetes Farbpigment ist ein schwarzer Kupferchromitspinell, wie er beispielsweise als Black 30C965 von der Firma "The Shepherd Color Company" erhältlich ist. Dieses Farbpigment wirkt vorwiegend absorbierend. Ein bevorzugt reflektierendes Farbpigment ist ein gelbes Farbpigment (Polier-Rutil auf Chrom/Antimon/Titan-Basis), bevorzugt YELLOW 193 der gleichen Firma.

Die Farbpigmente werden bevorzugt dem Bindemittel zugemischt, können jedoch auf irgendeine andere Weise auf oder in dem lsolierformkörper gelangen.

Durch die Verwendung eines Isolierfasergewebes können die Isolierformkörper mit sehr geringen Dicken bzw. Wandstärken gefertigt werden, wobei mindestens Mindestwandstärken von 1 mm oder sogar darunter realisiert werden können, ohne dass die mechanische Widerstandsfähigkeit durch Faserbruch beim Pressen oder bei einer Belastung, insbesondere einer Dauerbelastung durch Vibrationen beobachtet wurde.

## Patentansprüche

1. Isolierformteil für ein heißgasführendes Bauteil, insbesondere für eine Abgasanlage eines Verbrennungsmotors, das aus einem Isolierfasergewebe gefertigt ist.

2. Isolierformteil nach Anspruch 1, **dadurch gekennzeichnet, dass** das Isolierfasergewebe ein Silikatfasergewebe und/oder ein Glasfasergewebe und/oder ein Gewebe aus mineralischen Fasern ist.

3. Isolierformteil nach Anspruch 1 oder 2, **dadurch gekennzeichnet, dass** die Isolierfasern des Isolierfasergewebes verzwirnt sind.

4. Isolierformteil nach einem der Ansprüche 1 bis 3, **dadurch gekennzeichnet, dass** das Isolierfasergewebe durch Bindemittel verfestigt und zum Isolierformteil heißgepresst ist.

5. Isolierformteil nach einem der Ansprüche 1 bis 4, **gekennzeichnet durch** zugesetzte Farbpigmente.

6. Isolierformteil nach einem der Ansprüche 1 bis 5, **dadurch gekennzeichnet, dass** die Farbpigmente wärmereflektierend und/oder wärmeabsorbierend sind.

7. Isolierformteil nach einem der Ansprüche 3 bis 6, **dadurch gekennzeichnet, dass** die Farbpigmente dem Bindemittel zugesetzt sind.

8. Isolierformteil nach einem der Ansprüche 1 bis 7 mit einer Mindestdicke von 1 mm oder weniger.
